# FASCICULE DE BREVET EUROPEEN

(11) **EP 2 310 838 B1**
(45) Date de publication et mention de la délivrance du brevet: **27.07.2016**
(21) Numéro de dépôt: 09740465.1
(22) Date de dépôt: 14.08.2009
(51) Int. Cl.: G01N 21/956, G02B 27/00, G06K 7/10

(54) **DISPOSITIF DE LECTURE DE CODES GRAVES**
LESESYSTEM FÜR GRAVIERTE CODES
READER FOR ENGRAVED CODES

(30) Priorité: 14.08.2008 FR 0855599
(43) Date de publication de la demande: 20.04.2011
(73) Titulaire: ANALYTIC - TRACABILITE HOSPITALIERE, 59220 Denain (FR)
(72) Inventeur: COUTANT, Frédéric, F-44310 Saint Philibert De Grand Lieu (FR); MAZEAUD, Guillaume, F-44230 Saint Sebatien Sur Loire (FR); HUBERT, Jean-Baptiste, F-44390 Casson (FR)
(74) Mandataire: Cabinet Plasseraud
(86) Numéro de dépôt international: PCT/FR2009/051591
(87) Numéro de publication internationale: WO 2010/018351

(56) Documents cités:
- DE-A1- 19 510 257
- JP-A- 2005 018 391
- JP-A- 2007 286 793
- US-A1- 2008 017 717

## Description

### Domaine technique

L'invention se rapporte à un dispositif d'éclairage destiné à augmenter le contraste d'une image d'une gravure réalisée sur une surface, notamment par micropercussion ou par laser. L'invention concerne également un procédé pour la mise en oeuvre d'un tel dispositif ainsi qu'un dispositif de lecture de gravures réalisées sur une surface comportant un tel dispositif d'éclairage.

### État de la technique

La gravure de points à la surface de pièces, métalliques ou non, est classiquement utilisée pour le codage d'informations, notamment à des fins d'identification et de traçabilité. Ces gravures peuvent en particulier être réalisées au moyen d'un laser, générant de multiples brûlures, ou par des micropercussions exécutées sur la surface à marquer. Ces technologies permettent de graver des gravures en réalisant des points très petits, typiquement d'un diamètre de l'ordre de 0,2 mm. Cette finesse permet avantageusement de rendre discrète la gravure sur la pièce marquée.

Pour lire des gravures, il est connu d'éclairer la surface gravée au moyen d'un faisceau lumineux, monochrome ou blanc, circulaire diffus. Un tel éclairage permet de mettre en évidence les différences d'épaisseur par illumination des bords des trous et des bosses à la surface. Cette solution est efficace sur une surface plane et brillante et pour lire des gravures gravées par laser, mais ne convient pas si la surface est altérée, c'est-à-dire si elle n'est pas complètement lisse en dehors des zones de gravure.

Il est également connu d'éclairer la surface au moyen d'un faisceau lumineux, monochrome ou blanc, coaxial à l'axe de visée, par l'intermédiaire d'une lame séparatrice de faisceaux placée sur le chemin de l'axe de visée et de l'éclairage. Avec cette solution, seuls les rayons frappant la surface ailleurs que sur les gravures sont renvoyés vers l'oeil de la caméra, ce qui permet de faire apparaître les points de gravure noirs sur un fond blanc. Cette solution, très efficace pour la lecture de gravures sur une surface plane et brillante, n'est pas bien adaptée si la surface est altérée ou si elle n'est pas plane.

Ces solutions sont également relativement peu efficaces lorsque la position relative de la surface gravée par rapport au dispositif de lecture est variable.

Le risque d'erreur de lecture est encore accru lorsque la gravure à lire est réalisée sur des surfaces susceptibles de présenter des formes diverses (planes, concaves ou convexes) ou sur des surfaces pouvant présenter des états de surface très différents ou encore sur des surfaces dont la nature peut être variable.

Enfin, la finesse des points de gravure rend délicats la lecture et le déchiffrage des gravures.

Il existe donc un besoin pour un dispositif de lecture permettant de résoudre, au moins partiellement, les problèmes susmentionnés.

Un but de l'invention est de répondre à ce besoin.

Le document US-A1-2008/017717 décrit un dispositif de lecture d'information avec une unité d'illumination à fond clair et une autre unité d'illumination à fond obscur.

Le document DE-A1-195 10 257 décrit un dispositif de lecture de symbole avec une réflexion réduite.

### Résumé de l'invention

L'invention propose un dispositif défini par la revendication no.1, destiné à augmenter le contraste d'une image d'une gravure réalisée sur une surface, notamment par micropercussion ou par laser.

Comme on le verra plus en détail dans la suite de la description, en positionnant la gravure dans la région de rapprochement maximal des axes de visée et d'incidence, de préférence, le cas échéant, à proximité du point d'intersection de ces axes, un dispositif d'éclairage selon l'invention permet, notamment grâce à sa puissante capacité d'illumination en lumière polarisée, d'obtenir un excellent contraste de l'image de la gravure et une bonne homogénéité de ce contraste, que la surface soit plane, légèrement concave ou légèrement convexe, brillante ou mate, même lorsque les points formant la gravure présentent un diamètre de l'ordre de 0,2 mm et même lorsque le positionnement de la gravure par rapport au dispositif d'éclairage n'est pas précis.

De préférence, le dispositif d'éclairage comporte notamment une ou plusieurs des caractéristiques optionnelles suivantes :
- L'axe de visée coupe l'axe d'incidence.
- Le premier filtre polarisant est mobile en rotation autour de l'axe de visée.
- La source de lumière polarisée est apte à produire une illumination, mesurée à 50 mm de ladite source de lumière polarisée, supérieure à 130 000 lux, de préférence supérieure à 150 000 lux, de préférence toujours supérieure à 180 000 lux.
- Ladite lumière polarisée est monochromatique et/ou focalisée.
- La plage de longueurs d'onde de ladite lumière polarisée est centrée sur une bande passante comprise entre 600 et 650 nm.
- Le dispositif d'éclairage comporte en outre une source de lumière diffuse disposée de manière à pouvoir éclairer la région où l'axe d'incidence et l'axe de visée sont les plus proches l'un de l'autre.
- La source de lumière diffuse produit, à pleine puissance, une illumination, mesurée à 50 mm de ladite source de lumière diffuse, inférieure à 2000 lux.
- La source de lumière diffuse est apte à émettre une lumière non polarisée présentant spectre de fréquences sensiblement identique à celui de la lumière polarisée.
- Le dispositif d'éclairage comporte en outre un module de pilotage commandant le fonctionnement de la source de lumière polarisée et, le cas échéant, le fonctionnement de la source de lumière diffuse, le module de pilotage étant apte à moduler la puissance émise par la source de lumière polarisée et/ou la source de lumière diffuse.
- L'angle α est inférieur à 60°, de préférence inférieur à 55°. Un angle α d'environ 50° est préféré entre tous.

De préférence, la distance minimale entre l'axe de visée et l'axe d'incidence est inférieure à 10 mm, de préférence inférieure à 5 mm, de préférence inférieure à 2 mm, de préférence encore inférieure à 1 mm. De manière optimale, l'axe d'incidence coupe l'axe de visée.

La source de lumière polarisée peut comporter un ensemble de plusieurs diodes électroluminescentes conventionnelles et/ou, de préférence, une ou plusieurs diodes électroluminescentes de forte puissance. De préférence également, la puissance de cette source lumineuse est supérieure à 30 lumens, de préférence supérieure à 40 lumens, voire supérieure à 45 lumens. De préférence encore, l'illumination mesurée à 50 mm de la source de lumière polarisée est supérieure à 180 000 lux. Avantageusement, ces dispositions garantissent la transmission d'une quantité élevée de lumière au dispositif de capture d'image.

L'angle total d'ouverture du faisceau de lumière émis par cette source de lumière est de préférence supérieur à 90°, de préférence supérieur à 100°, de préférence encore supérieur à 110° et/ou inférieur à 150°, de préférence inférieur à 140°, voire inférieur à 130°.

De préférence, la source de lumière polarisée comporte une optique de focalisation permettant de régler l'angle total d'ouverture du faisceau de lumière émis. De préférence toujours, l'angle total d'ouverture est supérieur à 10°, de préférence supérieur à 12°, de préférence encore supérieur à 14° et/ou inférieur à 40°, inférieur à 36°, de préférence inférieur à 34°. Avantageusement, il est ainsi possible de concentrer la puissance lumineuse vers l'intérieur des points de gravure et de traverser les filtres polarisants avec une perte limitée de luminosité.

La lumière polarisée est de préférence focalisée, par exemple au moyen d'une lentille de focalisation. Avantageusement, la quantité de lumière polarisée projetée sur la gravure en est augmentée. De préférence, le degré de la focalisation est réglable.

Dans un mode de réalisation, la source de lumière polarisée émet une lumière monochromatique. La longueur d'onde de la lumière peut être comprise entre 600 et 650 nm. De préférence, la lumière polarisée est rouge, bleue ou infrarouge.

Le premier filtre polarisant est de préférence réalisé en triacétate. De préférence encore, il présente une épaisseur inférieure à 200 µm, et, de préférence toujours, d'environ 150 µm. Le premier filtre polarisant est nécessairement linéaire, un polarisant circulaire étant inadapté.

De préférence, le premier filtre polarisant est monté mobile en rotation autour de l'axe de visée. De préférence, l'amplitude maximale de la rotation du premier filtre polarisant autour de l'axe de visée est comprise ente 45° et 85°. La position angulaire du premier filtre polarisant, agissant comme analyseur de la lumière polarisée réfléchie par la surface gravée, peut donc être réglée afin d'optimiser le contraste.

De préférence, un dispositif d'éclairage selon l'invention comporte encore une source de lumière diffuse apte à éclairer ladite surface. La lumière diffuse permet avantageusement d'augmenter la quantité de lumière projetée sur la surface gravée et renvoyée au premier filtre polarisant. Elle permet ainsi de limiter l'effet de la perte de puissance lumineuse résultant de l'utilisation des filtres polarisants linéaires.

La projection de lumière diffuse est particulièrement avantageuse lorsque la surface gravée est très mate ou très brillante.

De préférence, la source de lumière diffuse projette de la lumière sensiblement selon l'axe de visée V, c'est-à-dire éclaire la surface gravée sensiblement perpendiculairement à cette surface. Ce type d'éclairage est particulièrement avantageux lorsque la surface gravée est lisse et mate.

De préférence, cette source de lumière diffuse comporte une ou plusieurs diodes électroluminescentes. L'énergie développée par cette source lumineuse est de préférence inférieure à 6 lumens, de préférence inférieure à 4 lumens. De préférence toujours, l'angle total d'ouverture du faisceau de lumière émis par la source de lumière diffuse est supérieur à 40°, de préférence supérieur à 45°, de préférence encore supérieur à 50° et/ou inférieur à 110°, de préférence inférieur à 100°, de préférence toujours inférieur à 90°. De préférence, l'illumination mesurée à 50 mm de la source de lumière diffuse est toujours inférieure à 2000 lux.

De préférence, la lumière diffuse et la lumière polarisée sont sensiblement de même nature. Cependant, de préférence, la lumière diffuse n'est pas focalisée ni polarisée.

Dans un mode de réalisation, le dispositif d'éclairage comporte encore un module de pilotage apte à piloter la source de lumière polarisée et, le cas échéant, la source de lumière diffuse.

Le pilotage de ces sources de lumière peut en particulier être adapté afin de limiter la consommation énergétique, et donc la chaleur émise. En particulier, le module de pilotage peut n'activer la source de lumière polarisée qu'à intervalles réguliers.

Pour une surface gravée déterminée, les inventeurs ont observé qu'il existe une puissance pour la lumière polarisée qui optimise le fonctionnement du dispositif d'éclairage selon l'invention. En modulant la puissance de la lumière polarisée, il est cependant possible d'optimiser le fonctionnement du dispositif d'éclairage pour différentes surfaces gravées, pourvu que les puissances optimales associées à ces surfaces soient émises pendant ladite modulation. De préférence, le module de pilotage est donc apte à moduler la puissance de la lumière polarisée émise, par exemple de manière sinusoïdale ou suivant des créneaux.

Le module de pilotage peut également synchroniser la source de lumière polarisée et la source de lumière diffuse l'une par rapport à l'autre, par exemple en assurant des cycles allumage-extinction de ces deux sources simultanés ou déphasés, c'est-à-dire décalés dans le temps.

Le module de pilotage peut en particulier être programmé afin d'activer simultanément la source de lumière polarisée et la source de lumière diffuse. Avantageusement, le fonctionnement du dispositif d'éclairage est sensiblement amélioré lorsque la surface gravée n'est pas plane. En outre, l'activation simultanée des deux sources lumineuses améliore le fonctionnement du dispositif d'éclairage lorsque la gravure à éclairer n'est pas disposée précisément à proximité de la région de rapprochement maximal de l'axe de visée et de l'axe d'incidence.

De préférence, le dispositif d'éclairage est indépendant du dispositif de capture d'image et/ou de la cible portant la surface gravée. Avantageusement, le dispositif d'éclairage peut ainsi être facilement remplacé ou utilisé dans différents dispositifs de lecture.

L'invention se rapporte encore à un dispositif de lecture d'une gravure ménagée sur une surface, ledit dispositif comportant un dispositif de capture d'image et un dispositif d'éclairage selon l'invention disposés de manière que la lumière polarisée émise par la source de lumière polarisée, réfléchie par ladite surface et ayant traversé le premier filtre polarisant linéaire, soit dirigée selon l'axe d'un oeil dudit dispositif de capture d'image.

Dans un dispositif de lecture selon l'invention, de préférence, la longueur d'onde de la lumière polarisée et/ou de la lumière diffuse est adaptée au dispositif de capture d'image de manière à maximiser la quantité de lumière perçue par ce dernier compte tenu de son spectre d'absorption. Par exemple, les capteurs CCD des caméras fonctionnent généralement de manière optimale lorsque la lumière qu'ils reçoivent est centrée sur une fréquence déterminée. De préférence, la plage des longueurs d'onde de la lumière polarisée comprend donc la longueur d'onde optimale pour le fonctionnement du dispositif de capture d'image. Dans un mode de réalisation, cette plage est sensiblement centrée sur cette longueur d'onde optimale.

De préférence, le dispositif d'éclairage comporte un module de pilotage de la source de lumière polarisée et/ou, le cas échéant, de la source de lumière diffuse, le module de pilotage étant apte à commander la source de lumière polarisée et/ou la source de lumière diffuse de manière à ce qu'elle(s) n'émette(nt) de lumière que lorsque le capteur du dispositif de capture d'image peut être éclairé. Dans le cas où le dispositif de capture d'image est une caméra par exemple, la source de lumière polarisée et/ou la source de lumière diffuse n'émettent ainsi, de préférence, que lorsque l'obturateur de la caméra ne masque pas le capteur, c'est-à-dire lorsque la caméra a l'oeil ouvert et « regarde ».

De préférence, le module de pilotage est apte à moduler la puissance de la lumière polarisée et/ou de la lumière diffuse, et est programmé pour ne moduler ladite puissance que lorsque le dispositif de capture d'image regarde, c'est-à-dire est apte à capturer une image.

Un dispositif de lecture selon l'invention peut en particulier se présenter sous la forme d'un pistolet ou d'une douchette.

La description se rapporte aussi à un procédé d'amélioration du contraste d'une image d'une gravure réalisée sur une surface, dans lequel on présente ladite gravure devant une ouverture d'entrée d'un dispositif d'éclairage selon l'invention.

Dans un mode de réalisation, la source de lumière polarisée dudit dispositif d'éclairage est monochromatique et on choisit la fréquence centrale de la lumière polarisée en fonction de la nature de la surface.

La description se rapporte enfin à un procédé de lecture d'une image d'une gravure réalisée sur une surface, dans lequel on présente ladite gravure devant une ouverture d'entrée d'un dispositif d'éclairage d'un dispositif de lecture selon l'invention.

Dans ces procédés, de préférence, ladite surface est présentée sensiblement perpendiculairement à l'axe de visée.

De préférence, l'angle d'incidence β entre l'axe d'incidence et la surface gravée au point d'intersection avec l'axe d'incidence est déterminé en fonction de la forme des points de gravure. De préférence, l'angle d'incidence β est compris entre 35° et 55°.

La plage des longueurs d'onde de la lumière polarisée est de préférence adaptée au matériau et/ou à la texture de la surface gravée, c'est-à-dire à la « nature » de cette surface. Les inventeurs ont en effet constaté que pour une plage de longueurs d'onde déterminée l'efficacité du dispositif d'éclairage est variable.

De préférence, la plage des longueurs d'onde de la lumière polarisée est déterminée en fonction du dispositif de capture d'image et de la nature de la surface gravée afin d'optimiser la puissance lumineuse reçue par les capteurs du dispositif de capture d'image. De préférence toujours, la plage des longueurs d'onde de la lumière polarisée est centrée sur une bande passante de 430 nm à 490 nm lorsque la surface est en fonte d'aluminium et/ou la plage des longueurs d'onde de la lumière polarisée est centrée sur une bande passante de 830 nm à 880 nm lorsque la surface est en en acier inoxydable.

Les procédés peuvent en particulier être mis en oeuvre pour augmenter le contraste et/ou lire des gravures comportant, voire constituées par, des points en relief (« bosses ») ou en creux (« cuvettes »), dont la longueur et, de préférence, la largeur, dans le plan tangent à la surface, est (sont) inférieure(s) à 1,0 mm, inférieure(s) à 0,5 mm, inférieure(s) à 0,4 mm, inférieure(s) à 0,3 mm, voire inférieure(s) à 0,2 mm. La longueur d'une cuvette est la plus grande dimension de l'ouverture de cette cuvette. Sa largeur est la plus grande dimension de l'ouverture mesurée perpendiculairement à sa longueur. La longueur d'une bosse est la plus grande dimension de la base de cette bosse. Sa largeur est la plus grande dimension de cette base mesurée perpendiculairement à sa longueur.

Les cuvettes peuvent en particulier être avoir été générées par micropercussion ou par laser.

### Définitions

L'angle α entre deux axes non sécants est égal à l'angle entre deux plans normaux à ces axes.

Par « dispositif portatif », on entend un dispositif qui peut être manipulé et utilisé à la main. Un dispositif de lecture selon l'invention n'est pas nécessairement intégré physiquement à un appareillage fixe, notamment parce qu'un positionnement précis de la surface gravée n'est pas requis. Il peut donc avantageusement être rendu portatif. De préférence un dispositif portatif selon l'invention pèse moins de 2 kg, moins de 1 kg, voire moins de 500 g. Dans un mode de réalisation, un dispositif portatif comporte une poignée, voire une unique poignée.

Par « gravure », on entend une marque gravée sur une surface, indépendamment de l'information éventuelle qu'elle peut porter. Une gravure peut en particulier consister en une série de caractères alphanumériques, par exemple un identifiant, un dessin, un code, ou une marque.

Par « monochromatique » on entend une lumière dont la couleur n'est formée que d'une longueur d'onde ou, par extension de sens, d'une bande très étroite de longueurs d'onde. Typiquement, cette bande de longueurs d'ondes s'étend sur 50 nm ou moins.

Par « comportant un », il faut comprendre « comportant au moins un », sauf indication contraire.

### Brève description des figures

D'autres caractéristiques et avantages de l'invention apparaîtront encore à la lecture de la description détaillée qui va suivre et à l'examen du dessin annexé dans lequel
- la figure 1 représente schématiquement un dispositif de lecture comparatif dans une position de service dans laquelle ledit dispositif effectue une lecture d'une gravure ;
- la figure 2 représente plus en détail le dispositif d'éclairage, représenté sur la figure 1, et
- les figures 3 et 4 illustrent le fonctionnement d'un dispositif d'éclairage pour lire une gravure ménagée sur une surface sensiblement lisse et sur une surface altérée, respectivement.

Les modes de réalisation décrits et représentés sont fournis à des fins illustratives et non limitatives.

### Description détaillée d'un mode de réalisation

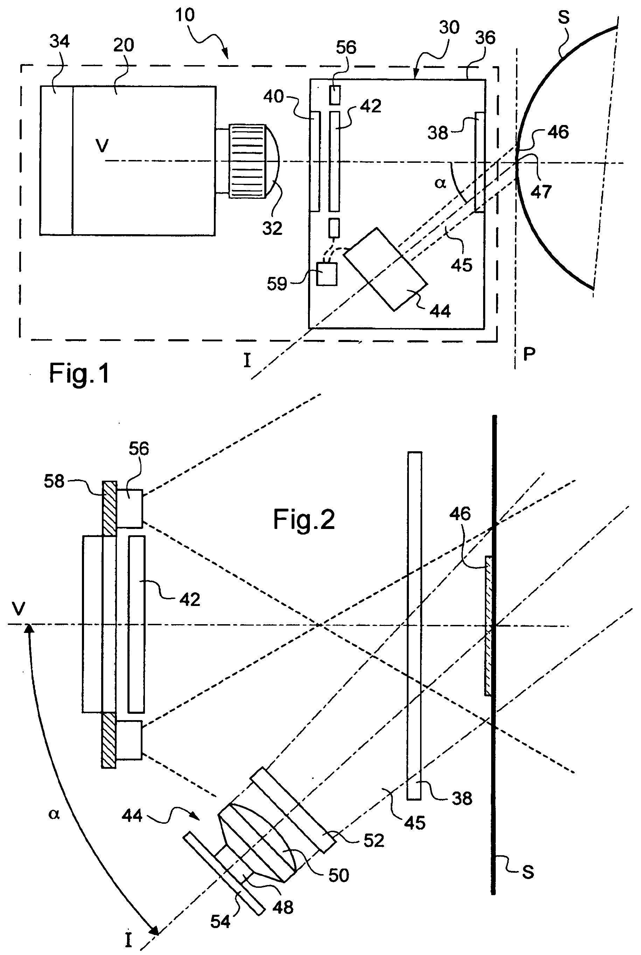

Le dispositif de lecture 10 représenté sur la figure 1 comporte un dispositif de capture d'image 20 et un dispositif d'éclairage 30.

Le dispositif de capture d'image 20 peut être, par exemple, une caméra ou un appareil photo, et présente un oeil 32, d'axe V ou « axe de visée » selon lequel l'image capturée pénètre à l'intérieur du dispositif de capture d'image 20.

De préférence, le dispositif de capture d'image 20 est associé à un dispositif de traitement 34 capable d'interpréter, par exemple de déchiffrer, l'image capturée par le dispositif de capture d'image 20.

Le dispositif d'éclairage 30 comporte un boîtier 36 présentant une ouverture d'entrée 38 et une ouverture de sortie 40 pouvant être obturées, par exemple au moyen d'un verre sensiblement transparent, et de préférence traité de manière à limiter les reflets ou à augmenter la transparence. Les ouvertures d'entrée 38 et de sortie 40 sont disposées sensiblement coaxialement selon l'axe de visée V, l'ouverture de sortie 40 étant en regard de l'oeil 32. L'espace entre l'ouverture d'entrée 38 et l'ouverture de sortie 40 ne présente aucun obstacle susceptible d'entraver un faisceau lumineux se dirigeant depuis l'ouverture d'entrée 38 vers l'ouverture de sortie 40. De préférence, cet espace est rempli d'air.

Le dispositif d'éclairage 30 comporte encore un premier filtre polarisant 42 linéaire disposé à proximité de l'ouverture de sortie 40 et s'étendant sensiblement parallèlement à l'ouverture de sortie 40 de manière à masquer l'ouverture de sortie 40, c'est-à-dire de manière que sensiblement toute la lumière sortant du boîtier 36 par l'ouverture de sortie 40 ait nécessairement traversé le premier filtre polarisant 42. Le premier filtre polarisant 42 est donc également orienté suivant l'axe de visée V. Il est mobile en rotation autour de l'axe de visée V.

Le dispositif d'éclairage 30 comporte encore une source de lumière polarisée 44 disposée de manière à pouvoir émettre, selon un axe d'incidence I, un faisceau de lumière incidente 45, polarisée linéairement. De préférence, la source de lumière polarisée 44 comporte une ou plusieurs diodes électroluminescentes de forte puissance.

L'axe de visée V et l'axe de l'incidence I sont sécants en un point d'intersection 47 à l'extérieur du dispositif d'éclairage 30. L'angle α entre l'axe de visée V et l'axe d'incidence I est ici d'environ 40°.

L'ouverture d'entrée 38 est dimensionnée de manière qu'une partie au moins du faisceau de lumière incidente 45, de préférence sensiblement la totalité de ce faisceau, puisse la traverser.

Le dispositif de lecture 10 est représenté dans une position de service préférée dans laquelle il est apte à lire une gravure, sous la forme d'un code 46, ménagée sur une surface S convexe. Dans cette position, le code 46 est disposé sensiblement au point d'intersection 47 et s'étend en regard de l'ouverture d'entrée 38 selon un plan P sensiblement perpendiculaire à l'axe de visée V. Le dispositif d'éclairage 30 fonctionne cependant correctement en cas de positionnement approximatif de la surface S.

Le dispositif d'éclairage 30 est représenté plus en détail sur la figure 2. En particulier, la source de lumière polarisée 44 comprend une source de lumière monochromatique 48, puis suivant le chemin de la lumière émise par cette source, successivement une optique de focalisation sous la forme d'une lentille de focalisation 50, et un deuxième filtre polarisant 52 linéaire.

Le dispositif d'éclairage 30 ne comporte aucun obstacle entre le filtre polarisant linéaire 52 et l'ouverture d'entrée 38. De préférence, cet espace est rempli d'air.

Sensiblement toute la lumière émise par la source de lumière monochromatique 48 est projetée sur l'optique de focalisation 50. Sensiblement toute la lumière sortant de l'optique de focalisation 50 est projetée sur le deuxième filtre polarisant 52. De préférence toujours, sensiblement toute la lumière sortant du deuxième filtre polarisant 52 est projetée sur l'ouverture d'entrée 38.

La source de lumière monochromatique 48 est fixée sur un circuit électronique 54.

La position de la lentille de focalisation 50 est réglable selon l'axe d'incidence I afin de pouvoir modifier le degré de focalisation du faisceau de lumière monochromatique.

Le dispositif d'éclairage 30 comporte en outre une source de lumière diffuse 56 en l'occurrence sous la forme de diodes électroluminescentes disposées à la périphérie du premier filtre polarisant 42, par exemple fixées sur un circuit électronique 58.

De préférence, la source de lumière diffuse 56 est disposée de manière à pouvoir éclairer le code 46, de préférence à travers l'ouverture d'entrée 38. En variante, la source de lumière diffuse 56 pourrait être disposée à l'extérieur du boîtier 36. Quel que soit le mode de réalisation, de préférence, la source de lumière diffuse 56 génère une lumière qui ne traverse pas le premier filtre polarisant 42.

L'ouverture d'entrée 38 et l'ouverture de sortie 40 sont dimensionnées de manière à permettre le passage d'un faisceau de lumière de dimensions adaptées au code gravé. Le faisceau de lumière peut par exemple présenter une largeur et/ou une hauteur supérieures à 10 mm, de préférence supérieure à 20 mm, voire supérieure à 25 mm. De préférence, l'ouverture d'entrée 38 et/ou l'ouverture de sortie 40 présentent une longueur inférieure à 35 mm, de préférence d'environ 30 mm et une largeur inférieure à 25 mm, de préférence d'environ 19 mm.

Le dispositif d'éclairage 30 comporte enfin un module de pilotage 59 permettant de moduler l'éclairage généré par la source de lumière polarisée et la source de lumière diffuse.

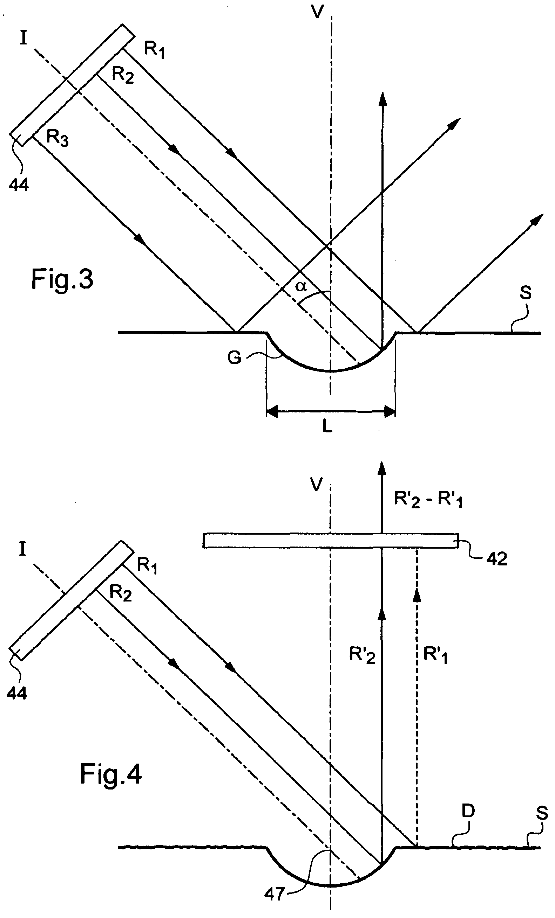

Le fonctionnement des dispositifs représentés sur les figures 1 et 2 est à présent décrit également au regard des figures 3 et 4. Sur les figures 3 et 4, un point de gravure est représenté en coupe sous la forme d'une cuvette G. La longueur L de cette cuvette est indiquée.

La surface S est positionnée dans la position de service, de préférence sensiblement perpendiculairement à l'axe de visée V, la gravure 46 faisant face à l'ouverture d'entrée 38. La source de lumière polarisée 44 est activée et projette, à travers l'ouverture d'entrée 38, une lumière polarisée, focalisée et monochromatique sur une zone de la surface S comportant la gravure. L'illumination, mesurée à 50 mm de la source de lumière polarisée, est, au moins par intermittence, supérieure à 100 000 lux.

Plus précisément, la lumière émise par la source de lumière monochromatique 48 traverse successivement la lentille de focalisation 50 et le deuxième filtre polarisant 52 linéaire avant de traverser l'ouverture d'entrée 38 et d'être projeté sur la surface S, et en particulier sur la gravure sur cette surface. Une partie de la lumière réfléchie par la surface S est renvoyée suivant l'axe de visée V vers le premier filtre polarisant linéaire 42, puis, après avoir traversé ce dernier, traverse l'ouverture de sortie 40 avant de pénétrer, par l'intermédiaire de l'oeil 32, dans le dispositif de capture d'image 20.

Lorsque les rayons de la lumière polarisée sont projetés sur une surface sensiblement plane, comme représenté sur la figure 3, compte tenu de l'angle α entre l'axe de visée et l'axe d'incidence, la majeure partie de ces rayons n'est pas transmise selon l'axe de visée, et ne parvient donc pas au dispositif de capture d'image (rayonnements R₁ et R₃).

Au contraire, une proportion importante de la lumière réfléchie par la partie de la cuvette G faisant face à la source de lumière polarisée est réfléchie selon l'axe de visée V (rayonnement R₂). La cuvette G apparaît donc, pour le dispositif de capture d'image 20, comme un point clair sur un fond sombre.

Lorsque les rayons de la lumière polarisée sont projetés sur une surface altérée ou irrégulière, comme représenté sur la figure 4, les défauts de surface D renvoient également de la lumière polarisée selon l'axe de visée V. Le premier filtre polarisant 42, agissant comme analyseur de la lumière polarisée réfléchie permet de supprimer une portion du rayonnement spéculaire, c'est-à-dire du rayonnement réfléchi selon l'axe de visée V. Cependant, le rayonnement spéculaire réfléchi par les défauts de la surface irrégulière (rayonnement R₁') est, en moyenne surfacique, beaucoup plus faible que le rayonnement spéculaire renvoyé par la surface de la cuvette G éclairée par la lumière polarisée (rayonnement R₂'). Ainsi, la surface irrégulière renvoie une image formée d'une multitude de micropoints clairs et sombres, correspondant aux différentes aspérités, alors que la cuvette G renvoie l'image d'une tache claire et d'une tache sombre de dimensions beaucoup plus grandes, typiquement 100 fois, 1 000 fois ou 10 000 fois plus grandes que lesdits micropoints.

L'intensité du rayonnement R₁' est donc beaucoup plus faible que l'intensité du rayonnement R₂'.

L'action du premier filtre polarisant 42, classiquement appelé « analyseur », sur la lumière polarisée réfléchie qu'il reçoit permet d'augmenter le contraste de l'image reçue par le dispositif de capture d'image. En effet, si « R₂' » désigne la quantité de lumière réfléchie par la gravure et « R₁' » désigne la quantité de lumière réfléchie par les défauts à la surface S, avec « R₂' » très supérieur à « R₁' », « R₂' » et « R₁' » étant polarisés dans la même direction, il est possible, avec le premier filtre polarisant 42 d'absorber sensiblement l'intégralité de la lumière R₁' tout en laissant traverser le premier filtre polarisant 42 par une partie, sensiblement égale à « R₂'-R₁' », de la lumière réfléchie par les cavités des points de la gravure. Autrement dit, le rayonnement R₁' est filtré par le premier filtre polarisant 42 alors qu'une partie importante du rayonnement R₂' parvient à traverser le premier filtre polarisant 42 et à pénétrer dans l'oeil 32 du dispositif de capture d'image 20.

Avantageusement, les défauts de la surface, rendus invisibles, ne perturbent donc pas la lecture de la gravure. Le contraste de l'image de la gravure est ainsi avantageusement amélioré.

Le cas échéant, pour encore améliorer l'efficacité du dispositif d'éclairage, le premier filtre polarisant 42 peut être tourné autour de l'axe de visée V.

On constate également que le dispositif d'éclairage peut être efficace même si l'axe de visée V et l'axe d'incidence I ne sont pas sécants et même si la surface S n'est pas disposée précisément par rapport au dispositif d'éclairage, et en particulier si elle n'est pas disposée exactement perpendiculairement à l'axe de visée V.

Comme cela apparaît clairement à présent, le dispositif d'éclairage permet d'augmenter le contraste d'une image d'une gravure, que cette gravure soit réalisée sur une surface brillante ou mate et même lorsque cette gravure comporte des points de très petit diamètre, et en particulier des points gravés par micropercussion ou par laser. Un tel dispositif d'éclairage est également efficace pour lire des gravures réalisées sur des surfaces qui ne sont pas planes.

Par ailleurs, le dispositif d'éclairage peut être avantageusement autonome, et rendu compatible avec les dispositifs de lecture et/ou de déchiffrage actuellement sur le marché.

De plus, le dispositif d'éclairage ne nécessite qu'un nombre de constituants très limité et peut donc être avantageusement rendu très compact. Son intégration dans un dispositif de lecture et/ou de déchiffrage en est facilitée. Pour la même raison, la fabrication d'un tel dispositif d'éclairage peut être très économique.

Enfin, un tel dispositif d'éclairage peut fonctionner sans qu'un positionnement précis de la gravure par rapport au dispositif d'éclairage ne soit indispensable. Avantageusement, le dispositif d'éclairage, voire un dispositif de lecture selon l'invention, peuvent être rendus autonomes et/ou portatifs.

Le dispositif de lecture peut également être utilisé pour lire d'autres structures que des gravures, telles que celles définies ci-dessous.

### 2) Invention « améliorée »

La suite de la description concerne principalement une invention dite « améliorée ». Sauf mention contraire, toute la description qui suit concerne l'invention « améliorée ».

### Dispositif d'éclairage « amélioré »

L'invention utilise un dispositif d'éclairage destiné à augmenter le contraste d'une image d'une structure ménagée en creux ou en relief sur une surface, en particulier une image d'une gravure par points, ledit dispositif comportant :
- une première source de lumière, disposée de manière à émettre, selon un premier axe d'incidence I₁, une première lumière, de préférence polarisée linéairement, la largeur de la bande passante de ladite première lumière, ou «première bande passante », étant inférieure à 100 nm, de préférence inférieure à 60 nm, de préférence encore inférieure à 40 nm, de préférence inférieure à 20 nm,
- une deuxième source de lumière disposée de manière à émettre, selon un deuxième axe d'incidence I₂, une deuxième lumière, de préférence polarisée linéairement, la largeur de la bande passante de ladite deuxième lumière, ou «deuxième bande passante», étant inférieure à 100 nm, de préférence inférieure à 60 nm, de préférence inférieure à 40 nm, de préférence inférieure à 20 nm,
- une troisième source de lumière disposée de manière à émettre, selon un troisième axe d'incidence I₃, une troisième lumière de préférence diffuse, la largeur de la bande passante de la troisième lumière, ou « troisième bande passante », étant inférieure à 100 nm, de préférence inférieure à 60 nm, de préférence encore inférieure à 40 nm, de préférence inférieure à 20 nm,
les premier, deuxième et troisième axes d'incidence étant sensiblement concourants et les bandes passantes des première, deuxième et troisième lumières étant écartées les unes des autres, c'est-à-dire ne se recouvrant pas, même partiellement.

Comme on le verra plus en détail dans la suite de la description, un tel dispositif d'éclairage amélioré permet une adaptation rapide de l'illumination de la structure à la nature et/ou à la forme de la surface portant la structure afin d'optimiser le contraste de l'image.

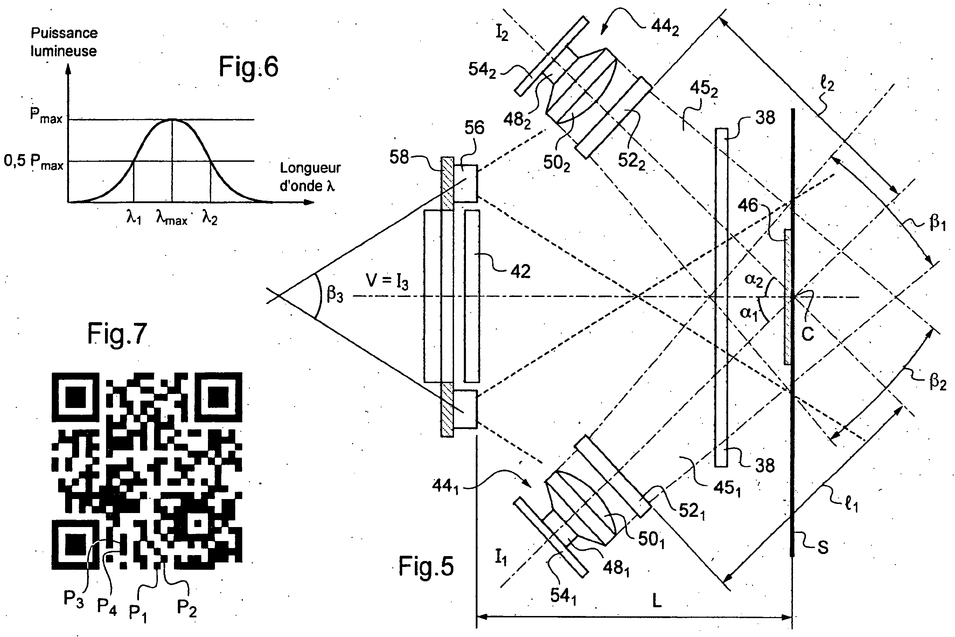

La largeur d'une bande passante est définie comme la largeur spectrale mesurée à 50% du pic d'intensité maximale, c'est-à-dire correspond à la largeur (λ₂ - λ₁) comprenant toutes les longueurs d'onde s'étendant de chaque côté du pic d'intensité maximale (correspondant à la longueur d'onde λₘₐₓ) et pour lesquelles l'intensité lumineuse est supérieure à 50% de l'intensité maximale (Pₘₐₓ), comme représenté sur la figure 6.

De préférence, la bande passante d'au moins une des première, deuxième et troisième sources de lumière, de préférence de chacune desdites première, deuxième et troisième sources de lumière, présente une largeur inférieure à 20 nm.

De préférence,
- la première bande passante est au moins en partie, de préférence totalement incluse dans la bande 620-645 nm (la première lumière est alors une lumière rouge) et/ou
- la deuxième bande passante est au moins en partie, de préférence totalement incluse dans la bande 460-490 nm (la deuxième lumière est alors une lumière bleue), et/ou
- la troisième bande passante est au moins en partie, de préférence totalement incluse dans la bande 520-550 nm (la troisième lumière est alors une lumière verte).

Par « sensiblement concourants », on entend que la distance minimale entre deux quelconques des axes considérés est inférieure à 10 mm, de préférence inférieure à 5 mm, de préférence inférieure à 2 mm. De préférence, lesdits axes sont concourants.

La puissance lumineuse émise par la première source de lumière peut être supérieure à 35, supérieure à 45, voire supérieure à 60 lumen par Watt. Cette puissance peut être obtenue au moyen d'une ou plusieurs diodes électroluminescentes. Pour améliorer l'homogénéité de l'éclairage et simplifier l'optique de focalisation, cette puissance est de préférence obtenue au moyen d'une unique diode électroluminescente.

La puissance lumineuse émise par la deuxième source de lumière peut être supérieure à 10, supérieure à 12, voire supérieure à 15 lumen par Watt. Cette puissance peut être obtenue au moyen d'une ou plusieurs diodes électroluminescentes. Pour améliorer l'homogénéité de l'éclairage et simplifier l'optique de focalisation, cette puissance est de préférence obtenue au moyen d'une unique diode électroluminescente.

Avec une diode unique, les inventeurs ont constaté une intensité supérieure à 90% de l'intensité maximale sur une zone carrée de 100 mm² à environ 50 mm de la source de lumière.

La puissance lumineuse émise par la troisième source de lumière peut être supérieure à 480, supérieure à 600, voire supérieure à 720 lumen par Watt.

Dans un mode de réalisation, la troisième source lumineuse comporte plus de 8, plus de 10 et/ou moins de 16, moins de 14 diodes électroluminescentes disposées le long d'un cercle, toutes orientées parallèlement les unes aux autres, de préférence selon l'axe dudit cercle, de préférence réparties équi-angulairement autour dudit cercle.

De préférence, toutes les puissances des diodes électroluminescentes de la troisième source lumineuse sont identiques. De préférence, chacune des diodes électroluminescentes de la troisième source lumineuse présente une puissance lumineuse supérieure à 40, supérieure à 50, voire supérieure à 60 lumen par Watt.

Les fortes puissances des sources de lumière permettent avantageusement de saturer l'image afin de limiter les effets de l'éclairage ambiant. Elles permettent également de compenser l'absorption lumineuse, notamment celle qui résulterait de la traversée de filtres polarisants en quadrature.

Dans un mode de réalisation,
- l'ouverture β₁ de la première source de lumière et/ou l'ouverture β₂ de la deuxième source de lumière est supérieure à 20°, supérieure à 24° et/ou inférieure à 40°, inférieure à 36°, une ouverture d'environ 30° étant préférée entre toutes ; et/ou
- l'ouverture β₃ de la troisième source de lumière est supérieure à 100°, supérieure à 120°, supérieure à 130° et/ou inférieure à 160°, inférieure à 150°, inférieure à 146°, une ouverture d'environ 140° étant préférée entre toutes.

Une « ouverture » est égale à l'angle au sommet du cône de lumière émis par la source de lumière considérée et délimité par une surface correspondant à une intensité lumineuse égale à 50% de l'intensité lumineuse maximale.

Les première et deuxième sources de lumière émettent une lumière polarisée, de préférence selon une direction de polarisation non modifiable.

De préférence, la troisième source de lumière émet une lumière diffuse. A cet effet, elle comporte de préférence un bloc diffusant, par exemple en polycarbonate, le coefficient de transmission du bloc diffusant pouvant être supérieur à 40 %, supérieur à 45 % et/ou inférieur à 60 %, un coefficient de transmission d'environ 50 % étant préféré.

Dans un mode de réalisation, à tout instant, au plus une source de lumière parmi les première, deuxième et troisième sources de lumière peut être allumée.

Dans un mode de réalisation, la puissance lumineuse de chacune des première, deuxième et troisième sources de lumière peut être modifiée.

Dans un mode de réalisation, seule la puissance lumineuse de la première source de lumière peut être modifiée.

Un dispositif d'éclairage amélioré selon l'invention peut comporter un module de pilotage « amélioré », qui peut être identique ou différent du module de pilotage décrit ci-dessus pour un dispositif d'éclairage de base, et réciproquement.

Le module de pilotage « amélioré » peut être programmé de manière à pouvoir faire varier
- la ou les sources de lumière allumées, et/ou
- la puissance émise par une source de lumière allumée, et/ou
- la direction de l'angle d'incidence d'une source de lumière allumée, et/ou
- l'ouverture d'une source de lumière allumée.

Le module de pilotage « amélioré » peut être programmé de manière à ne pouvoir faire varier que
- la ou les sources de lumière allumées, et/ou
- la puissance émise par une source de lumière allumée.

Dans un mode de réalisation, le module de pilotage « amélioré » est programmé de manière à ce que, à tout instant, au plus une source de lumière parmi les première, deuxième et troisième sources de lumière soit allumée.

Dans un mode de réalisation, le module de pilotage « amélioré » est programmé pour ne faire varier la puissance lumineuse que de la première source de lumière.

Dans un mode de réalisation,
- la première source de lumière comporte une unique diode électroluminescente, la tension électrique d'alimentation de ladite diode est comprise entre 3 V et 4,2 V, de préférence d'environ 3,5 V, et l'intensité électrique d'alimentation est supérieure à 200 mA, supérieure à 250 mA et/ou inférieure à 800 mA, inférieure à 700 mA, une intensité variable, variant entre 350 et 700 mA étant préférée entre toutes ; et/ou
- la deuxième source de lumière comporte une unique diode électroluminescente, la tension électrique d'alimentation de ladite diode est comprise entre 3 V et 4,2 V, de préférence d'environ 3,5 V, et l'intensité électrique d'alimentation est supérieure à 600 mA, supérieure à 650 mA et/ou inférieure à 800 mA, inférieure à 750 mA, une intensité d'environ 700 mA étant préférée entre toutes ; et/ou
- la troisième source de lumière comporte une pluralité de diodes électroluminescentes, la tension électrique d'alimentation de chaque diode est comprise entre 3 V et 4,2 V, de préférence d'environ 3,5 V, et l'intensité électrique d'alimentation de chaque diode est supérieure à 15 mA, supérieure à 20 mA, et/ou inférieure à 50 mA, inférieure à 45 mA, une intensité d'environ 30mA étant préférée entre toutes.

### Dispositif de lecture « amélioré »

L'invention concerne un dispositif de lecture d'une structure ménagée sur une surface, ledit dispositif comportant un dispositif de capture d'image et un dispositif d'éclairage « amélioré ». On appelle « dispositif de lecture amélioré » un tel dispositif, par comparaison avec le dispositif de lecture « de base » décrit ci-dessus.

Les premier et deuxième axes d'incidence, forment avec l'axe optique du dispositif de capture d'image des premier et deuxième angles α₁ et α₂ supérieurs à 45° et inférieurs à 65°. L'axe optique d'un dispositif de capture d'image est classiquement l'axe de l'objectif, généralement une lentille convergente, par lequel les rayons lumineux à destination d'un capteur, classiquement un capteur CCD ou CMOS, pénètrent dans ce dispositif.

Dans un mode de réalisation, les premier et deuxième axes d'incidence et ledit axe optique sont coplanaires. En particulier, les angles α₁ et α₂ peuvent être identiques. Dans ce plan, les premier et deuxième axes d'incidence peuvent être symétriques par rapport audit axe optique.

Le troisième axe d'incidence est confondu avec l'axe optique.

Dans un mode de réalisation, les premier, deuxième et troisième axes d'incidence et ledit axe optique sont coplanaires.

Dans un mode de réalisation, la troisième source de lumière est constituée d'un anneau lumineux. Avantageusement, la fenêtre de lecture du dispositif de capture d'image peut être placée, selon l'axe optique, sensiblement au milieu de cet anneau lumineux.

De préférence, le dispositif de lecture amélioré comporte un premier filtre polarisant linéaire, orienté selon un axe de visée V se confondant avec l'axe optique du dispositif de capture d'image. Dans un mode de réalisation, la direction de polarisation de ce premier filtre polarisant est non modifiable.

Ce premier filtre polarisant est en quadrature avec les deux deuxièmes filtres polarisants assurant la polarisation de la première et deuxième lumières. Cette mise en quadrature signifie qu'une grande partie de la lumière polarisée émise par la première et/ou deuxième source de lumière est filtrée par la succession d'un deuxième filtre polarisant et dudit premier filtre polarisant.

Dans un mode de réalisation préféré, la direction de polarisation de la première et/ou deuxième source de lumière et la direction de polarisation imposée par le premier filtre polarisant sont fixes, c'est-à-dire ne peuvent pas être modifiées.

Le premier filtre polarisant linéaire « amélioré » peut être placé devant la fenêtre de lecture du dispositif de capture d'image.

De préférence, la lumière émise par la troisième source de lumière n'est pas polarisée au moins jusqu'à atteindre ladite surface. Après réflexion sur ladite surface, elle peut traverser ledit premier filtre polarisant avant d'atteindre le dispositif de capture d'image.

De préférence, la troisième source lumineuse présente la forme d'un anneau lumineux, la fenêtre de lecture du dispositif de capture d'image étant disposée dans le cylindre virtuel s'étendant selon l'axe dudit anneau et de même diamètre que ledit anneau.

Les sources de lumière peuvent être à angle d'incidence et/ou à ouverture variables.

De préférence, tous les organes constituant un dispositif d'éclairage « amélioré » sont fixes, y compris les éléments assurant une polarisation de lumière.

Dans un mode de réalisation, le dispositif d'éclairage ne comporte aucun miroir.

Dans un mode de réalisation, la trajectoire de la lumière depuis au moins une des première, deuxième et troisième sources de lumière, de préférence depuis une quelconque de ces sources de lumière, jusqu'à ladite surface S, puis depuis cette surface jusqu'au dispositif de capture d'image est directe, c'est-à-dire n'est pas déviée par un miroir.

Dans un mode de réalisation, le dispositif de lecture « amélioré » comporte un module de pilotage « amélioré » programmé de manière à
a) modifier le dispositif de lecture suivant une pluralité de configurations, en particulier en
   - allumant successivement, dans un ordre quelconque, une ou plusieurs des première, deuxième et troisième sources de lumière ; et/ou
   - faisant varier, pour une source de lumière, l'angle d'incidence et/ou l'ouverture et/ou la puissance de cette source de lumière ;
b) évaluer la qualité du contraste de l'image lue par le dispositif de capture d'image pour chacune desdites configurations et déterminer une configuration optimale ;
c) configurer le dispositif de lecture suivant la configuration optimale.

La qualité du contraste peut être évaluée par toute méthode connue. Un contraste élevé correspond à un « détachement » plus net d'un point par rapport aux points voisins.

Dans un mode de réalisation, le dispositif de lecture amélioré comporte un module de pilotage « amélioré » programmé de manière à
a) modifier le dispositif de lecture suivant une pluralité de configurations, en particulier en
   - allumant successivement, dans un ordre quelconque, la première source de lumière, la deuxième source de lumière et la troisième source de lumière ; et/ou
   - faisant varier la puissance de la première source de lumière lorsqu'elle est allumée ;
b) évaluer la qualité du contraste de l'image lue par le dispositif de capture d'image pour chacune desdites configurations et déterminer une configuration optimale ;
c) configurer le dispositif de lecture suivant la configuration optimale.

Un dispositif d'éclairage améliorée, voire un dispositif de lecture selon l'invention améliorée, peuvent être rendus autonomes et/ou portatifs.

### Procédé « amélioré »

Ce qui suit concerne un procédé « amélioré » ou « de base » d'amélioration du contraste d'une image d'une structure réalisée sur une surface, procédé dans lequel on lit ladite structure au moyen d'un dispositif de lecture « amélioré » ou « de base ».

La surface portant la structure peut être métallique ou non, en particulier en inox, en titane, en aluminium, en or ou en argent. Elle peut être notamment convexe, concave, d'aspect mat ou brillant, doré, argenté, ou peint, lisse ou rugueuse.

La structure peut comprendre une pluralité de points, par exemple d'un diamètre inférieur à 1 mm, inférieur à 0,5 mm, voire inférieur à 0,2 mm.

Les points peuvent être réalisés en creux, par exemple par gravure, en particulier au moyen d'un laser ou par micro-percussion. Ces points peuvent être également réalisés en relief, par des micro-bossages, obtenus par déformation ou écrouissage. La structure peut en particulier être une gravure telle que décrite ci-dessus. Les points peuvent enfin n'être ni en creux, ni en relief et résulter d'une modification locale du matériau de la surface, par exemple d'une oxydation ou d'un changement de phase cristallographique.

Dans un mode de réalisation, la structure n'est pas imprimée (comme les codes à barres classiquement imprimés sur les emballages). En effet, bien qu'il soit envisageable d'utiliser un dispositif selon l'invention pour lire une structure imprimée, un dispositif selon l'invention est conçu pour la lecture de structures plus difficiles à lire.

Comme représenté sur la figure 7 (représentant un exemple de code à deux dimensions), des points peuvent être distincts, comme les points p₁ et p₂, ou être adjacents, comme les points p₃ et p₄.

La plus grande dimension de la structure peut en particulier être inférieure à 10 mm, inférieure à 5 mm, voire inférieure à 4 mm. La structure peut comporter plus de 50, plus de 60, voire plus de 70 points. Typiquement, la structure peut présenter la forme d'un code de 3 mm x 3 mm comportant environ 80 points. Un dispositif de lecture selon l'invention s'est en effet avéré particulièrement performant pour lire des codes de très petites dimensions.

Un procédé « amélioré » peut en particulier être utilisé pour améliorer le contraste d'une image d'une structure réalisée sur une surface métallique, par exemple en inox, en titane, en aluminium, en or ou en argent et/ou une surface brillante, et en particulier une surface dont la rugosité arithmétique Rₐ est inférieure à 0,1 µm.

De préférence, on utilise la première source de lumière, et seulement la première source de lumière, avec interposition d'un premier et d'un deuxième filtres polarisants en quadrature comme décrit ci-dessus, pour lire une structure obtenue par micro-percussion et/ou portée par une surface bombée et/ou brillante.

De préférence, on utilise la deuxième source de lumière, et seulement la deuxième source de lumière, avec interposition d'un premier et d'un deuxième filtres polarisants en quadrature comme décrit ci-dessus, pour lire une structure, en particulier une structure en relief, notamment obtenue par déformation ou écrouissage, portée par une surface métallique mate, c'est-à-dire présentant une rugosité arithmétique Rₐ supérieure à 0,1 µm, et/ou portée par une surface plane.

De préférence, on utilise la troisième source de lumière, et seulement la troisième source de lumière, pour lire une structure obtenue par réaction (notamment oxydation ou changement de structure cristallographique), par exemple par trempe ou revenu de surface, ou au moyen d'un laser, sur un matériau métallique. De manière surprenante, un éclairage d'une telle structure au moyen d'une lumière verte diffuse, non polarisée, s'est avéré particulièrement efficace.

Avantageusement, le procédé « améliorée » permet une lecture efficace de structures ménagées sur des surfaces présentant des natures, des formes, ou des états de surface très diverses.

Ce qui suit concerne ainsi encore un procédé de lecture de structures, par exemple de gravures, portées par une pluralité de surfaces présentant des natures et/ou des formes et/ou des états de surface différents, procédé dans lequel on lit lesdites structures au moyen d'un même dispositif de lecture « de base » ou « amélioré ».

La pluralité de surfaces peut en particulier comporter au moins deux surfaces
- de formes différentes, par exemple une surface plane et une surface non plane ; et/ou
- de natures différentes, par exemple une surface métallique et une surface non métallique ; et/ou
- présentant des états de surfaces différents, par exemple des rugosités différentes.

D'autres caractéristiques et avantages du procédé améliorée apparaîtront encore à la lecture de la description détaillée qui va suivre et à l'examen du dessin annexé dans lequel :
- la figure 5 annexée qui représente schématiquement un dispositif de lecture « amélioré » selon l'invention, dans une position de service dans laquelle ledit dispositif effectue une lecture d'une gravure. Le mode de réalisation décrit en détail ci-dessous et représenté sur la figure 5 est fourni à des fins illustratives et non limitatives ;
- la figure 6 un exemple d'un spectre lumineux ;
- la figure 7 représente un exemple de code à deux dimensions pouvant être lu avec un dispositif de lecture de base, ou amélioré.

Sur la figure 5, des références identiques ont été utilisées pour désigner des organes identiques ou analogues à ceux de l'exemple « de base ». Ces organes ne sont donc pas de nouveau décrits en détail. Les organes des première et deuxième sources de lumière étant similaires à ceux de la source de lumière polarisée 44 décrite ci-dessus, les mêmes références, affectées d'un indice « 1 » et « 2 », ont été utilisées.

La figure 5 représente un exemple de dispositif d'éclairage « amélioré ». Ce dispositif comporte des première et deuxième sources de lumière, référencées respectivement 44₁ et 44₂, émettant une lumière rouge polarisée et une lumière bleue polarisée, selon des axes d'incidence I₁ et I₂ respectivement, formant des angles α₁ et α₂, respectivement, d'environ 55° avec un axe de visée V.

La première source de lumière est constituée de diodes électroluminescentes. Elle est alimentée avec trois niveaux d'intensité électrique : 350, 500 et 700 mA.

La deuxième source de lumière est constituée de diodes électroluminescentes. Elle est alimentée avec un unique niveau d'intensité électrique : 700 mA.

Le dispositif comporte encore une troisième source de lumière 56, émettant une lumière verte diffuse selon un axe d'incidence I₃ confondu avec l'axe de visée V.

La troisième source de lumière 56 est constituée de douze diodes électroluminescentes identiques équiangulairement réparties selon un cercle d'axe I₃. La troisième source de lumière 56 forme ainsi un anneau lumineux. La puissance lumineuse de chaque diode électroluminescente est supérieure à 60 lumen par Watt.

Chaque diode électroluminescente de la troisième source de lumière est alimentée avec un unique niveau d'intensité électrique : 30 mA.

La bande passante de la première source de lumière est 620-645 nm. L'ouverture β₁ de la première source de lumière est d'environ 30°.

La bande passante de la deuxième source de lumière est 460-490 nm. L'ouverture β₂ de la deuxième source de lumière est d'environ 30°.

La bande passante de la troisième source de lumière est 520-550 nm. L'ouverture β₃ de la troisième source de lumière est d'environ 140°.

La puissance lumineuse de la première source de lumière est supérieure à 35 lumen par Watt.

La puissance lumineuse de la deuxième source de lumière est supérieure à 10 lumen par Watt.

La puissance lumineuse de la troisième source de lumière est supérieure à 480 lumen par Watt.

Les trois axes d'incidence I₁, I₂, et I₃ sont coplanaires et concourants en un point C sensiblement au centre la zone de lecture.

De manière générale, la distance entre le point C et la première source de lumière 44₁, « l₁ », et/ou la distance entre le point C et la deuxième source de lumière 44₂, « l₂ », et/ou la distance entre le point C et le premier filtre polarisant 42, « l », est de préférence inférieure à 80 mm, inférieure à 70 mm, inférieure à 60 mm, inférieure à 50 mm. De préférence chacune de ces distances est inférieure à 80 mm, inférieure à 70 mm, inférieure à 60 mm, inférieure à 50 mm.

Un premier filtre polarisant 42, dont l'axe est l'axe de visée V, est disposé au milieu de l'anneau lumineux que constitue la troisième source de lumière. Ce premier filtre polarisant 42 assure une polarisation linéaire en quadrature avec celle des deuxièmes filtres polarisants 52₁ et 52₂ assurant la polarisation linéaire de la lumière émise par les première et deuxième sources de lumière, respectivement. Les directions de polarisation de ces différents filtres sont fixes.

L'axe de visée V, confondu avec l'axe d'incidence I₃ est l'axe optique d'un dispositif de capture d'image, par exemple d'une caméra, non représentée. Le dispositif de capture d'image reçoit donc de la lumière émise par les sources de lumière, réfléchie par la surface S, et ayant traversé le premier filtre polarisant 42, y compris lorsque la lumière est une lumière diffuse provenant de la troisième source de lumière.

Pour améliorer le contraste d'une image d'une structure, par exemple d'une gravure 46, on présente cette structure devant l'ouverture d'entrée 38. On allume la première source de lumière, rouge, et on fait varier la puissance afin de rechercher le contraste maximal.

On éteint ensuite la première source de lumière et on allume la deuxième source de lumière, bleue, en mesurant également le contraste.

On éteint ensuite la deuxième source de lumière, puis on allume la troisième source de lumière, verte, et on mesure une nouvelle fois le contraste.

On compare alors les mesures de contraste, on applique la configuration offrant un contraste maximal, puis on capture l'image de la structure et on l'interprète.

Un module de pilotage, non représenté, peut assurer ce fonctionnement.

Bien entendu, l'invention « améliorée » n'est pas limitée aux modes de réalisation décrits et représentés ci-dessus, fournis à titre d'exemples illustratifs et non limitatifs.

Un dispositif d'éclairage « amélioré » et un dispositif de lecture « amélioré » peuvent comporter une ou plusieurs des caractéristiques d'un dispositif d'éclairage « de base » et d'un dispositif de lecture « de base », sauf si de telles caractéristiques sont incompatibles.

En particulier, le dispositif de capture d'image d'un dispositif de lecture « amélioré » peut être identique ou différent de celui décrit dans le cadre du dispositif de lecture « de base ».

Le premier filtre polarisant d'un dispositif d'éclairage « amélioré » peuvent être identiques au premier filtre polarisant d'un dispositif d'éclairage « de base »

La première source de lumière polarisée et/ou la deuxième source de lumière, et le premier filtre polarisant linéaire peuvent constituer un dispositif d'éclairage « de base ». La troisième source de lumière peut constituer une source de lumière diffuse d'un tel dispositif d'éclairage « de base ».

Réciproquement, un dispositif d'éclairage « de base» et un dispositif de lecture « de base » peuvent comporter une ou plusieurs des caractéristiques d'un dispositif d'éclairage « amélioré » et d'un dispositif de lecture « amélioré », sauf si de telles caractéristiques sont incompatibles.

## Revendications

1. Dispositif de lecture d'une structure ménagée sur une surface (S), ledit dispositif de lecture comportant :
- un dispositif de capture d'image présentant un axe optique, et
- un dispositif d'éclairage destiné à augmenter le contraste d'une image de ladite structure ménagée sur ladite surface (S), ledit dispositif d'éclairage comportant :
- une première source de lumière (44₁), disposée de manière à émettre, selon un premier axe d'incidence I₁, une première lumière, la largeur de la bande passante de ladite première lumière, ou « première bande passante », étant inférieure à 100 nm,
- une deuxième source de lumière (44₂) disposée de manière à émettre, selon un deuxième axe d'incidence I₂, une deuxième lumière, la largeur de la bande passante de ladite deuxième lumière, ou « deuxième bande passante », étant inférieure à 100 nm,
- une troisième source de lumière (56) disposée de manière à émettre, selon un troisième axe d'incidence I₃, une troisième lumière la largeur de la bande passante de la troisième lumière, ou « troisième bande passante », étant inférieure à 100 nm,
les bandes passantes des première, deuxième et troisième lumières étant écartées les unes des autres,
les premier, deuxième et troisième axes d'incidence étant sensiblement concourants, et
les premier et deuxième axes d'incidence formant avec ledit axe optique des premier et deuxième angles α₁ et α₂ supérieurs à 45° et inférieurs à 65°, et le troisième axe d'incidence étant confondu avec ledit axe optique,
ledit dispositif d'éclairage comportant en outre un premier filtre polarisant (42) linéaire orienté selon ledit axe optique agissant comme analyseur et en quadrature avec des deuxièmes filtres polarisants (52₁ ; 52₂) assurant une polarisation linéaire des première et deuxième lumières.

2. Dispositif selon la revendication précédente, dans lequel la largeur d'au moins une des première, deuxième et troisième bandes passantes est inférieure à 20 nm.

3. Dispositif selon la revendication précédente, dans lequel la largeur de chacune des première, deuxième et troisième bandes passantes est inférieure à 20 nm.

4. Dispositif selon l'une quelconque des revendications précédentes, dans lequel la troisième lumière est diffuse.

5. Dispositif selon l'une quelconque des revendications précédentes, dans lequel
- la première bande passante est au moins en partie incluse dans la bande 620- 645 nm, et/ou
- la deuxième bande passante est au moins en partie incluse dans la bande 460- 490 nm, et/ou
- la troisième bande passante est au moins en partie incluse dans la bande 520- 550 nm.

6. Dispositif selon l'une quelconque des revendications précédentes, dans lequel
- la puissance lumineuse émise par la première source de lumière est supérieure à 35 lumen par Watt, et/ou
- la puissance lumineuse émise par la deuxième source de lumière est supérieure à 10 lumen par Watt, et/ou
- la puissance lumineuse émise par la troisième source de lumière est supérieure à 480 lumen par Watt.

7. Dispositif selon l'une quelconque des revendications précédentes, dans lequel
- l'ouverture β₁ de la première source de lumière et/ou l'ouverture β₂ de la deuxième source de lumière est supérieure à 25° et inférieure à 45° ; et/ou
- l'ouverture β₃ de la troisième source de lumière est supérieure à 100° et inférieure à 140°.

8. Dispositif selon l'une quelconque des revendications précédentes, comportant un module de pilotage programmé de manière à pouvoir faire varier
- la ou les sources de lumière allumées, et/ou
- la puissance émise par une source de lumière allumée, et/ou
- la direction de l'angle d'incidence d'une source de lumière allumée, et/ou
- l'ouverture d'une source de lumière allumée.

9. Dispositif selon l'une quelconque des revendications précédentes, dans lequel, à tout instant, au plus une source de lumière parmi les première, deuxième et troisième sources de lumière peut être allumée et/ou dans lequel, seule la puissance lumineuse de la première source de lumière peut être modifiée.

10. Dispositif selon l'une quelconque des revendications précédentes, dans lequel la troisième source de lumière est constituée d'un anneau lumineux dont l'axe est confondu avec ledit axe optique.

11. Dispositif selon l'une quelconque des revendications précédentes, comportant un module de pilotage programmé de manière à
a) modifier le dispositif de lecture suivant une pluralité de configurations,
b) évaluer la qualité du contraste de l'image lue par le dispositif de capture d'image pour chacune desdites configurations et déterminer une configuration optimale,
c) configurer le dispositif de lecture suivant la configuration optimale.

## Patentansprüche

1. Vorrichtung zum Lesen einer Struktur, die auf einer Oberfläche (S) angeordnet ist, wobei die Vorrichtung zum Lesen Folgendes umfasst:
- eine Vorrichtung zur Bilderfassung, die eine optische Achse aufweist, und
- eine Vorrichtung zur Beleuchtung, die ausgelegt ist, um den Kontrast eines Bildes der Struktur zu erhöhen, die auf der Fläche (S) angeordnet ist, wobei die Vorrichtung zur Beleuchtung Folgendes umfasst:
- eine erste Lichtquelle (44₁), die derart angeordnet ist, dass sie, gemäß einer ersten Einfallachse I₁, ein erstes Licht emittiert, wobei die Breite der Übertragungsbandbreite des ersten Lichts oder "erste Übertragurigsbandbreite" kleiner als 100 nm ist,
- eine zweite Lichtquelle (44₂), die derart angeordnet, dass sie, gemäß einer zweiten Einfallachse I₂, ein zweites Licht emittiert, wobei die Breite der Übertragungsbandbreite des zweiten Lichts oder "zweite Übertragungsbandbreite" kleiner als 100 nm ist,
- eine dritte Lichtquelle (56), die derart angeordnet, dass sie, gemäß einer dritten Einfallachse I₃, ein drittes Licht emittiert, wobei die Breite der Übertragungsbandbreite des dritten Lichts oder "dritte Übertragungsbandbreite" kleiner als 100 nm ist,
wobei die Übertragungsbandbreiten des ersten, zweiten und dritten Lichts voneinander beabstandet sind,
wobei die erste, zweite und dritte Einfallsachse im Wesentlichen zusammenfallen, und
die erste und die zweite Einfallsachse mit der optischen Achse einen ersten und zweiten Winkel α₁ und α₂ bilden, der größer als 45° und kleiner als 65° ist, und die dritte Einfallsachse mit der optischen Achse zusammenfällt,
wobei die Vorrichtung zur Beleuchtung außerdem einen ersten linearen Polarisierungsfilter (42) umfasst, ausgerichtet gemäß der optischen Achse, der als Analysator dient, und in Quadratur mit zweiten Polarisierungsfiltern (52₁; 52₂), die eine lineare Polarisation des ersten und des zweiten Lichts sicherstellen.

2. Vorrichtung nach dem vorhergehenden Anspruch, wobei die Breite von mindestens einer der ersten, zweiten und dritten Übertragungsbandbreite kleiner als 20 mm ist.

3. Vorrichtung nach dem vorhergehenden Anspruch, wobei die Breite jeder der ersten, zweiten und dritten Übertragungsbandbreite kleiner als 20 mm ist.

4. Vorrichtung nach einem der vorhergehenden Ansprüche, wobei das dritte Licht diffus ist.

5. Vorrichtung nach einem der vorhergehenden Ansprüche, wobei
- die erste Übertragungsbandbreite mindestens teilweise im Band 620 - 645 nm enthalten ist, und/oder
- die zweite Übertragungsbandbreite mindestens teilweise im Band 460 - 490 nm enthalten ist, und/oder
- die dritte Übertragungsbandbreite mindestens teilweise im Band 520 - 550 nm enthalten ist.

6. Vorrichtung nach einem der vorhergehenden Ansprüche, wobei
- die Lichtstärke, die von der ersten Lichtquelle emittiert wird, größer als 35 Lumen pro Watt ist, und/oder
- die Lichtstärke, die von der zweiten Lichtquelle emittiert wird, größer als 10 Lumen pro Watt ist, und/oder
- die Lichtstärke, die von der dritten Lichtquelle emittiert wird, größer als 480 Lumen pro Watt ist.

7. Vorrichtung nach einem der vorhergehenden Ansprüche, wobei
- die Öffnung β₁ der ersten Lichtquelle und/oder die Öffnung β₂ der zweiten Lichtquelle größer als 25° und kleiner als 45° ist; und/oder
- die Öffnung β₃ der dritten Lichtquelle größer als 100° und kleiner als 140° ist.

8. Vorrichtung nach einem der vorhergehenden Ansprüche, umfassend ein Steuerungsmodul, das derart programmiert ist, dass es Folgendes variieren lassen kann:
- die eingschaltete(n) Lichtquelle(n), und/oder
- die Stärke, die von einer eingeschalteten Lichtquelle emittiert wird, und/oder
- die Richtung des Einfallswinkels einer eingeschalteten Lichtquelle, und/oder
- die Öffnung einer eingeschalteten Lichtquelle.

9. Vorrichtung nach einem der vorhergehenden Ansprüche, wobei in jedem Augenblick höchstens eine Lichtquelle von der ersten, zweiten und dritten Lichtquelle eingeschaltet werden kann, und/oder wobei nur die Lichtstärke der ersten Lichtquelle modifiziert werden kann.

10. Vorrichtung nach einem der vorhergehenden Ansprüche, wobei die dritte Lichtquelle aus einem Lichtring besteht, dessen Achse mit der optischen Achse zusammenfällt.

11. Vorrichtung nach einem der vorhergehenden Ansprüche, umfassend ein Steuerungsmodul, das programmiert ist, um
a) die Vorrichtung zum Lesen gemäß einer Vielzahl von Konfigurationen zu modifizieren,
b) die Qualität des Kontrasts des Bildes zu bewerten, das von der Vorrichtung zur Bilderfassung für jede der Konfigurationen gelesen wird, und eine optimale Konfiguration zu bestimmen,
c) die Vorrichtung zum Lesen gemäß der optimalen Konfiguration zu konfigurieren.

## Claims

1. A reading device for reading a structure made on a surface (S), said reading device comprising:
- an image capture device exhibiting an optical axis; and
- a lighting device intended to increase the contrast of an image of a structure made on a surface (S), said lighting device comprising:
o a first light source (44₁), disposed so as to emit, along a first axis of incidence I₁, a first light, the width of the passband of said first light, or "first passband," being less than 100 nm,
o a second light source (442) disposed so as to emit, along a second axis of incidence I₂, a second light, the width of the passband of said second light, or "second passband," being less than 100 nm,
o a third light source (56) disposed so as to emit, along a third axis of incidence I₃, a third light, the width of the passband of the third light, or "third passband," being less than 100 nm,
the passbands of the first, second and third lights being mutually separated, the first, second and third axes of incidence being substantially concurrent, and the first and/or second axis of incidence forming, with said optical axis, first and second angles α₁ and α₂ greater than 45° and less than 65°, and the third axis of incidence being coincident with said optical axis,
said lighting device further comprising a first linear polarizing filter (42) oriented along said optical axis, acting as analyzer and in quadrature with second polarizing filters (52₁ ; 52₂) ensuring a linear polarization of the first and second lights.

2. The reading device as claimed in claim 1, in which the width of at least one of the first, second and third passbands is less than 20 nm.

3. The reading device as claimed in claim 1 or 2, in which the width of each of the first, second and third passbands is less than 20 nm.

4. The reading device as claimed in any of the preceding claims, in which the third light is diffuse.

5. The reading device as claimed in any of the preceding claims, in which
- the first passband is at least in part included in the band 620-645 nm, and/or
- the second passband is at least in part included in the band 460-490 nm, and/or
- the third passband is at least in part included in the band 520-550 nm.

6. The reading device as claimed in any of the preceding claims, in which
- the luminous power emitted by the first light source is greater than 35 lumens per Watt, and/or
- the luminous power emitted by the second light source is greater than 10 lumens per Watt, and/or
- the luminous power emitted by the third light source is greater than 480 lumens per Watt.

7. The reading device as claimed in any of the preceding claims, in which
- the aperture β₁ of the first light source and/or the aperture of the second light source is greater than 25° and less than 45°; and/or
- the aperture β₃ of the third light source is greater than 100° and less than 140°.

8. The reading device as claimed in any of the preceding claims, comprising a drive module programmed so as to be able to vary
- the light source or sources that is or are turned on, and/or
- the power emitted by a light source that is turned on, and/or
- the direction of the angle of incidence of a light source that is turned on, and/or
- the aperture of a light source that is turned on.

9. The reading device as claimed in any of the preceding claims, in which, at any instant, at most one light source out of the first, second and third light sources may be turned on and/or in which only the luminous power of the first light source may be modified.

10. The reading device as claimed in any of the preceding claims, in which the third light source consists of a luminous annulus whose axis coincides with said optical axis.

11. The reading device as claimed in any of the preceding claims,, comprising a drive module programmed so as to
a) modify the reading device in accordance with a plurality of configurations,
b) evaluate the quality of the contrast of the image read by the image capture device for each of said configurations and determine an optimal configuration;
c) configure the reading device in accordance with the optimal configuration.
